# EUROPÄISCHE PATENTSCHRIFT

(11) **EP 1 083 758 B1**
(45) Veröffentlichungstag und Bekanntmachung des Hinweises auf die Patenterteilung: **26.02.2003**
(21) Anmeldenummer: 00118331.8
(22) Anmeldetag: 24.08.2000
(51) Int. Cl.: H04Q 7/00

(54) **Verfahren zum Zugriff mehrerer Teilnehmerstationen eines Telekommunikationsnetzes auf einen Zugriffskanal**
Access procedure for several subscriber stations in a telecommunications network to an access channel
Procédé d'accès pour plusieurs postes d'abonnés d'un réseau de télécommunication à un canal d'accès

(30) Priorität: 07.09.1999 DE 19942505
(43) Veröffentlichungstag der Anmeldung: 14.03.2001
(73) Patentinhaber: ROBERT BOSCH GMBH, 70442 Stuttgart (DE)
(72) Erfinder: Hans, Martin, 31142 Hildesheim (DE)

(56) Entgegenhaltungen:
- EP-A- 0 036 146
- WO-A-99/41884

## Beschreibung

### Stand der Technik

Die Erfindung geht von einem Verfahren zum Zugriff mehrerer Teilnehmerstationen eines Telekommunikationsnetzes auf einen Zugriffskanal nach der Gattung des Hauptanspruchs aus.

Aus der Veröffentlichung "Concept Group Alpha-WCDMA-Evaluation Document (3.0), Part 1, ETSI-SMG2" ist ein Verfahren bekannt, das den Zugriff einer Vielzahl von als Mobilstationen ausgebildeten Nutzern auf einen wahlfreien Zugriffskanal RACH (Random Access Channel) gemäß dem UMTS-Standard (Universal Mobile Telecommunication System) regelt. Genutzt wird dazu das aus der Veröffentlichung "Computer Networks", Andrew S. Tanenbaum, Prentice-Hall, 1996 bekannte Slotted Aloha Prinzip, bei dem jeder Nutzer Datenpakete festgelegter, konstanter Länge zu definierten, diskreten Zeitpunkten auf dem Zugriffskanal sendet. Senden mehrere Nutzer ihr Datenpaket zum selben Zeitpunkt auf dem selben Zugriffskanal, so kommt es zur Kollision dieser Datenpakete. Dadurch kann es zu Störungen eines oder mehrerer dieser Datenpakete kommen. Gemäß dem aus der Veröffentlichung "Concept Group Alpha-WCDMA-Evaluation Document (3.0), Part 1, ETSI-SMG2" bekannten Verfahren ist die Zeit in Senderahmen der Dauer T = 20 ms unterteilt, wobei in jedem dieser Senderahmen m = 5 zeitlich äquidistante Offsetzeitpunkte definiert sind. Die zu sendenden Datenpakete bestehen dabei aus einer von n = 16 Präambel-Bit-Sequenzen gefolgt von einem Datenteil, der mit einem Spreizcode codiert wurde. Die Wahl des Spreizcodes, der für den Datenteil eines Datenpaketes verwendet wird, geht unter anderem aus der Wahl der Präambel-Bit-Sequenz für das entsprechende Datenpaket hervor.

Die Prozedur für den Zugriff auf den Zugriffskanal enthält unter anderem folgende Schritte: Zunächst wählt eine Mobilstation zufällig und gleichverteilt eine der n-Präambel-Bit-Sequenzen aus und codiert den Datenteil des zu sendenden Datenpakets mit dem der ausgewählten Präambel-Bit-Sequenz zugeordneten Spreizcode. Dann wählt diese Mobilstation ebenfalls zufällig und gleichverteilt einen der mwOffsetzeitpunkte innerhalb eines Senderahmens und sendet das erzeugte Datenpaket aus Präambel-Bit-Sequenz und codiertem Datenteil zu diesem Offsetzeitpunkt. Da verschiedene Präambel-Bit-Sequenzen und verschiedene Spreizcodes jeweils zueinander orthogonal sind, kollidieren zwei Datenpakete nur dann, wenn sie nicht nur zum gleichen Offsetzeitpunkt, sondern auch mit derselben Präambel-Bit-Sequenz gesendet wurden. Eine Kombination aus einer Präambel-Bit-Sequenz und einem Offsetzeitpunkt kann deshalb als einer von n * m RACH-Kanälen aufgefaßt werden. Die Wahrscheinlichkeit für eine Kollision zweier im gleichen Senderahmen gesendeter Datenpakete ist dann 1/(m*n). Hat eine Mobilstation mehrere Datenpakete auf dem RACH in aufeinanderfolgenden Senderahmen zu versenden, so wird die beschriebene Prozedur für jedes Datenpaket durchgeführt.

### Vorteile der Erfindung

Das erfindungsgemäße Verfahren mit den Merkmalen des Hauptanspruchs hat demgegenüber den Vorteil, daß bei erfolgreicher Übertragung eines ersten Datenpaketes der ersten Teilnehmerstation auf dem Zugriffskanal das nächste Datenpaket dieser Teilnehmerstation mit dem gleichen Präambelteil und zum gleichen Offsetzeitpunkt auf dem Zugriffskanal übertragen wird wie das erste Datenpaket und daß bei nicht erfolgreicher Übertragung des ersten Datenpaketes das nächste Datenpaket mit einer im Vergleich zum ersten Datenpaket unterschiedlichen Kombination aus Präambelteil und Offsetzeitpunkt auf dem Zugriffskanal gesendet wird.

Auf diese Weise wird die Kollisionswahrscheinlichkeit verschiedener Datenpakete auf dem Zugriffskanal verringert, ohne daß dafür eine zusätzliche Signalisierung, beispielsweise auf anderen Kanälen, erforderlich wäre. Das erfindungsgemäße Verfahren reduziert die Kollisionswahrscheinlichkeit erheblich in solchen Fällen, in denen es auf dem Zugriffskanal zu einer Kollision kommt, bei der eines der kollidierenden Datenpakete erfolgreich übertragen wird, während die anderen kollidierenden Datenpakete gestört werden. Beim erneuten Senden der gestörten Datenpakete konkurriert dann eine Mobilstation weniger um die noch möglichen Kombinationen aus Präambelteil und Offsetzeitpunkt.

Durch die in den Unteransprüchen aufgeführten Maßnahmen sind vorteilhafte Weiterbildungen und Verbesserungen des im Hauptanspruch angegebenen Verfahrens möglich.

Besonders vorteilhaft ist es, daß bei wiederholter nicht erfolgreicher Übertragung von Datenpaketen der ersten Teilnehmerstation auf dem Zugriffskanal eine Mindestanzahl der zugehörigen Kombinationen aus Präambelteil und Offsetzeitpunkt für die Übertragung zumindest eines nachfolgenden Datenpaketes ausgeschlossen werden. Auf diese Weise wird die Kollisionswahrscheinlichkeit weiter verringert, da sukzessive zur Störung führende Kombinationen aus Präambelteil und Offsetzeitpunkt für das Übertragen zumindest eines nachfolgenden Datenpaketes ausgeschlossen werden. Dabei kann die Zahl der nachfolgenden Datenpakete, für die diese Kombinationen ausgeschlossen werden, begrenzt werden, um eine dauerhafte Einschränkung der Wahlfreiheit des Zugriffs auf den Zugriffskanal zu vermeiden.

Ein weiterer Vorteil besteht darin, daß die Zahl der auszuschließenden Kombinationen aus Präambelteil und Offsetzeitpunkt auf einen vorgegebenen Wert begrenzt wird. Auf diese Weise wird ein entsprechendes Mindestmaß für die Wahlfreiheit des Zugriffs auf den Zugriffskanal gewährleistet. Ein weiterer Vorteil besteht darin, daß der vorgegebene Wert an der ersten Teilnehmerstation berechnet wird. Auf diese Weise können beispielsweise Benutzervorgaben hinsichtlich eines gewünschten Kompromisses zwischen maximaler Wahlfreiheit beim Zugriff auf den Zugriffskanal und minimaler Kollisionswahrscheinlichkeit berücksichtigt und gegebenenfalls aktualisiert werden. In diese Berechnung können auch Vorgaben des Netzbetreibers bezüglich der Wahlfreiheit und der Kollisionswahrscheinlichkeit als Parameter berücksichtigt werden.

Ein Vorteil besteht auch darin, daß der vorgegebene Wert von einer Basisstation des Telekommunikationsnetzes an die erste Teilnehmerstation übertragen wird. Auf diese Weise sind keine Rechen- und Speicheroperationen für den vorgegebenen Wert in der ersten Teilnehmerstation erforderlich, so daß Aufwand, Speicherplatz und Kosten für die erste Teilnehmerstation eingespart werden können.

### Zeichnung

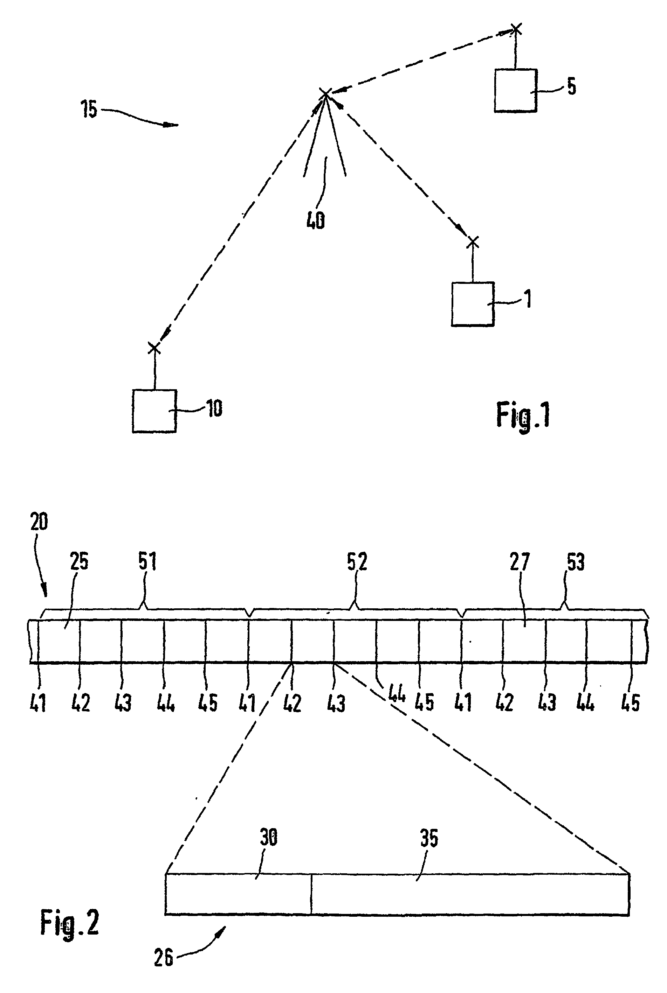

Ein Ausführungsbeispiel der Erfindung ist in der Zeichnung dargestellt und in der nachfolgenden Beschreibung näher erläutert. Es zeigen Figur 1 einen Teil eines Telekommunikationsnetzes und Figur 2 einen Zugriffskanal.

### Beschreibung des Ausführungsbeispiels

In Figur 1 kennzeichnet 40 eine Basisstation eines beispielsweise als Mobilfunknetz ausgebildeten Telekommunikationsnetzes 15. Ein solches Mobilfunknetz ist normalerweise zellular aufgebaut, wobei jede Funkzelle des Mobilfunknetzes von einer Basisstation versorgt wird. die Basisstation 40 spannt also eine Funkzelle im Mobilfunknetz auf, in der gemäß Figur 1 eine erste Teilnehmerstation 1, eine zweite Teilnehmerstation 5 und eine dritte Teilnehmerstation 10 angeordnet sind. Bei den drei Teilnehmerstationen 1, 5, 10 soll es sich beispielhaft um Mobilstationen, wie beispielsweise Mobiltelefone, Funktelefone, oder dergleichen handeln. Bei dem hier beschriebenen Ausführungsbeispiel sollen also die erste Teilnehmerstation 1 als erste Mobilstation, die zweite Teilnehmerstation 5 als zweite Mobilstation und die dritte Teilnehmerstation 10 als dritte Mobilstation ausgebildet sein. Gemäß Figur 1 können zwischen der Basisstation 40 und den einzelnen Mobilstationen 1, 5, 10 jeweils Signale ausgetauscht werden, wie durch die gestrichelten Doppelpfeile dargestellt ist. Dabei steht im Telekommunikationsnetz 15 ein wahlfreier Zugriffskanal 20 gemäß Figur 2 zur Verfügung, über den die einzelnen Mobilstationen 1, 5, 10 Datenpakete zur Basisstation 40 übertragen können. Der wahlfreie Zugriffskanal 20 wird dabei auch als RACH (Random Access Channel) bezeichnet. Über den RACH 20 können also in der Regel Nachrichten von mehreren Mobilstationen an die Basisstation 40 gesendet werden. Auf diese Weise können Nachrichten verschiedener Mobilstationen miteinander kollidieren. Die Basisstation 40 bestätigt daher ordnungsgemäß empfangene Nachrichten, indem sie entsprechende Bestätigungs- oder Quittierungsinformationen auf einem anderen, in Figur 1 nicht dargestellten Kanal, beispielsweise einem Paging-Kanal oder einem allgemeinen Dowlink-Control-Kanal, wie dem Forward Access Channel (FACH), an diejenigen Mobilstationen zurücksendet, deren Nachrichten sie ordnungsgemäß empfangen hat. Für den Fall, daß die Nachricht einer Mobilstation auf dem RACH 20 mit einer anderen Nachricht kollidiert, findet kein ordnungsgemäßer Empfang dieser Nachricht in der Basisstation 40 statt, so daß die Basisstation 40 auch keine Bestätigungsinformation an die entsprechende Mobilstation zurücksenden kann. Die Mobilstation sendet daher nach einer vorgegebenen Zeit, in der keine Bestätigungsinformation von der Basisstation 100 empfangen wurde, die Nachricht erneut über den RACH 20 zur Basisstation 40. Auf diese Weise droht eine Überlastung des RACH 20. Die Nachrichten werden in Form von Datenpaketen von den einzelnen Mobilstationen 1, 5, 10 zur Basistation 40 übertragen. Dabei wird das aus der Veröffentlichung "Computer Networks" von Andrew S. Tanenbaum, Prentice-Hall, 1996 bekannte Slotted Aloha Prinzip genutzt, bei dem jede Mobilstation 1, 5, 10 Datenpakete festgelegter, konstanter Länge zu definierten, diskreten Zeitpunkten auf dem RACH 20 sendet. Senden mehrere Mobilstationen ihr Datenpaket zum selben Zeitpunkt auf dem Zugriffskanal 20, so kommt es zur Kollision dieser Datenpakete, die zur Störung eines oder mehrerer dieser Datenpakete führen kann.

Ein Verfahren für den wahlfreien Zugriff der einzelnen Mobilstationen 1, 5, 10 auf den RACH 20 ist aus der Veröffentlichung Concept Group Alpha-WCDMA-Evaluation Document (3.0), Part 1, ETSI-SMG2" bekannt. Dieses Verfahren regelt den Zugriff einer Vielzahl von Mobilstationen auf den RACH 20 gemäß dem UMTS-Standard. Dabei ist der RACH 20 in Senderahmen 51, 52, 53 gemäß Figur 2 unterteilt, die beispielsweise eine Dauer von T = 20 ms aufweisen können. In jedem dieser Senderahmen 51, 52, 53 sind m = 5 zeitlich äquidistante Offsetzeitpunkte 41, ..., 45 definiert. Die zu sendenden Datenpakete bestehen aus einem von m = 16 als Präambel-Bit-Sequenz ausgebildeten Präambelteilen 30 gefolgt von einem Datenteil 35, der mit einem Spreizcode codiert wurde. In Figur 2 ist durch das Bezugszeichen 26 ein zweites Datenpaket gekennzeichnet und in seinem Aufbau dargestellt. Dabei kennzeichnet 30 den Präambelteil und 35 den Datenteil des zweiten Datenpaketes 26. In jedem der in Figur 2 dargestellten Senderahmen 51, 52, 53 des Zugriffskanals 20 kennzeichnet 41 einen ersten Offsetzeitpunkt, 42 einen zweiten Offsetzeitpunkt, 43 einen dritten Offsetzeitpunkt, 44 einen vierten Offsetzeitpunkt und 45 einen fünften Offsetzeitpunkt. Figur 2 zeigt dabei nur einen Ausschnitt des Zugriffskanals 20. Die Wahl des Spreizcodes, der für den Datenteil 35 eines Datenpaketes verwendet wird, geht unter anderem aus der Wahl der Präambel-Bit-Sequenz 30 des Datenpaketes hervor.

Die Prozedur des wahlfreien Zugriffs auf den Zugriffskanal 20 enthält unter anderem folgende Schritte: Zunächst wählt eine der Mobilstationen 1, 5, 10 zufällig und gleichverteilt eine der n Präambel-Bit-Sequenzen 30 aus und codiert den Datenteil 35 des zu sendenden Datenpakets mit dem dieser Präambel-Bit-Sequenz 30 zugeordneten Spreizcode. Dann wählt diese Mobilstation ebenfalls zufällig und gleichverteilt einen der m Offsetzeitpunkte 41, ..., 45 innerhalb eines der Senderahmen 51, 52, 53 und sendet das erzeugte Datenpaket, das aus dem Präambelteil 30 und dem codierten Datenteil 35 besteht, zu dem gewählten Offsetzeitpunkt. Da verschiedene Präambelteile 30 und verschiedene Spreizcodes jeweils zueinander orthogonal sind, kollidieren zwei Datenpakete nur dann, wenn sie nicht nur zum gleichen Offsetzeitpunkt, sondern auch mit derselben Präambel-Bit-Sequenz 30 gesendet wurden. Eine Kombination aus Präambel-Bit-Sequenz 30 und Offsetzeitpunkt 41, ..., 45 kann deshalb als einer von (n * m) RACH-Kanälen aufgefaßt werden. Die Wahrscheinlichkeit für eine Kollision zweier im gleichen Senderahmen gesendeter Datenpakete ist dann 1/(m*n).

Das erfindungsgemäße Verfahren betrifft Mobilstationen, die mehrere Datenpakete in aufeinanderfolgenden Senderahmen auf dem RACH 20 zu senden haben, sei es aufgrund der zu sendenden Datenmenge und/oder aufgrund der Mehrfachaussendung einzelner Datenpakete, die nicht erfolgreich übertragen werden konnten. Im folgenden wird die Übertragung mehrerer aufeinanderfolgenden Datenpakete von der ersten Mobilstation 1 zur Basisstation 40 beispielhaft beschrieben. Dabei soll gemäß Figur 2 ein erstes Datenpaket mit dem Bezugszeichen 25, ein zweites Datenpaket mit dem Bezugszeichen 26 und ein drittes Datenpaket mit dem Bezugszeichen 27 gekennzeichnet sein. Für das erste Datenpaket 25 verfährt die erste Mobilstation 1 wie oben beschrieben, d.h., sie wählt zufällig eine von (n * m) Kombinationen aus Präambel-Bit-Sequenzen und Offsetzeitpunkten und sendet das erste Datenpaket 25 entsprechend. Gemäß Figur 2 wird das erste Datenpaket 25 im ersten Senderahmen 51 zum ersten Offsetzeitpunkt 41 übertragen. Stellt die erste Mobilstation 1 eine erfolgreiche Übertragung des ersten Datenpaketes 25 durch Empfang einer entsprechenden Quittierungsmeldung der Basisstation 40 fest, so sendet sie das nächste Datenpaket mit derselben Kombination aus Präambel-Bit-Sequenz und Offsetzeitpunkt wie das erste Datenpaket 25. Das nächste Datenpaket ist dabei das zweite Datenpaket 26. Entdeckt anderenfalls die erste Mobilstation 1 beispielsweise durch das Ausbleiben einer Quittierungsmeldung der Basisstation 40 innerhalb einer vorgegebenen Zeit, daß das erste Datenpaket 25 kollidiert ist und dadurch gestört wurde, also nicht fehlerfrei übertragen wurde, so sendet sie als nächstes Datenpaket ein mit dem ersten Datenpaket 25 inhaltsgleiches Datenpaket, reduziert jedoch die Menge der Kombinationen aus Präambel-Bit-Sequenz und Offsetzeitpunkt, aus denen sie zufällig eine auswählt, um die Kombination, die für das erste Datenpaket 25 benutzt wurde, bei der es also zur Kollision kam. Auch in diesem Fall handelt es sich beim nächsten Datenpaket um das zweite Datenpaket 26. Gemäß dem Ausführungsbeispiel nach Figur 2 kam es beim ersten Datenpaket 25 zu einer Kollision auf dem RACH 20, so daß für das zweite Datenpaket 26 eine Kombination aus Präambel-Bit-Sequenz und Offsetzeitpunkt gewählt wurde, die von der für das erste Datenpaket 25 gewählten Kombination verschieden ist. So wird das zweite Datenpaket 26 im zweiten Senderahmen 52 zum zweiten Offsetzeitpunkt 42 übertragen. Das zweite Datenpaket 26 wird dann erfolgreich von der ersten Mobilstation 1 zur Basisstation 40 übertragen, so daß die erste Mobilstation 1 innerhalb der vorgegebenen Zeit eine Quittierungsmeldung von der Basisstation 40 erhält. Im dritten Senderahmen 53 kann dann die erste Mobilstation 1 ein Datenpaket mit neuem Inhalt als drittes Datenpaket 27 zur Basisstation 40 senden, wobei dieselbe Kombination aus Präambel-Bit-Sequenz und Offsetzeitpunkt gewählt wird wie beim zweiten Datenpaket 26. Gemäß Figur 2 ist erkennbar, daß das dritte Datenpaket 27 ebenfalls zum zweiten Offsetzeitpunkt 42 im dritten Senderahmen 53 von der ersten Mobilstation 1 zur Basisstation 40 auf dem RACH 20 gesendet wird.

Das erfindungsgemäße Verfahren reduziert die Kollisionswahrscheinlichkeit erheblich in solchen Fällen, in denen es auf dem RACH 20 zu einer Kollision kommt, bei der ein Datenpaket beispielsweise aufgrund erheblich höherer Sendeleistung der aussendenden Mobilstation erfolgreich übertragen wird, während die anderen Datenpakete mit geringerer Sendeleistung zum gleichen Offsetzeitpunkt gestört werden. Beim erneuten Senden der zuvor gestörten Datenpakete konkurriert dann eine Mobilstation weniger um die noch verfügbaren, d.h. nicht ausgeschlossenen freien Kombinationen von Präambel-Bit-Sequenz und Offsetzeitpunkt. Eine zu hohe Reduktion der Menge der Kombinationen aus Präambel-Bit-Sequenz und Offsetzeitpunkt bei wiederholter Störung eines Datenpaketes ist jedoch nicht sinnvoll, da sie die Wahlfreiheit für den Zugriff auf den RACH 20 einschränkt. Daher sollte die Anzahl k der Kombinationen, um die die gesamte Menge von (n * m) Kombinationen reduziert wird, auf einen vorgegebenen maximalen Wert kₘₐₓ begrenzt werden. Dabei sollte dann die verwendete Menge freier bzw. auswählbarer Kombinationen jeweils um die k zuletzt genutzten Kombinationen reduziert sein. Der vorgegebene maximale Wert kₘₐₓ kann auf einem anderen Mobilfunkkanal, beispielsweise dem beschriebenen Paging-Kanal oder einem Steuersignalkanal, wie dem Broadcast Control Channel (BCCH) von der Basisstation 40 zur ersten Mobilstation 1 übertragen werden. Zusätzlich oder alternativ kann vorgesehen sein, den vorgegebenen maximalen Wert kₘₐₓ in der ersten Mobilstation 1 zu berechnen. Die Berechnung kann dabei auf Parametern basieren, die von der Basisstation 40 zur ersten Mobilstation 1 übertragen und/oder von einem Benutzer an der ersten Mobilstation 1 mittels einer Benutzerschnittstelle, beispielsweise einer Tastatur, vorgegeben wurden. Auf diese Weise kann von einem Netzbetreiber und/oder vom Benutzer der ersten Mobilstation 1 beispielsweise eine gewünschte minimale Kollisionswahrscheinlichkeit bei einer gewünschten maximalen Wahlfreiheit beim Zugriff auf den RACH 20 vorgegeben und bei Bedarf aktualisiert werden. Die erste Mobilstation 1 berechnet dann aus der gewünschten minimalen Kollisionswahrscheinlichkeit und der gewünschten maximalen Wahlfreiheit den vorgegebenen maximalen Wert kₘₐₓ als Kompromiß zwischen einer möglichst geringen Kollisionswahrscheinlichkeit und einer möglichst großen Wahlfreiheit beim Zugriff auf den Zugriffskanal 20. Der in der ersten Mobilstation 1 errechnete oder von der Basisstation 40 empfangene vorgegebene maximale Wert kₘₐₓ kann dann in der ersten Mobilstation 1 in einem vorzugsweise nichtflüchtigen Speicher dauerhaft gespeichert werden, so daß dieser Wert für eine längere Zeit zur Verfügung steht. Wird dieser Speicher als Schreib-/Lesespeicher ausgebildet, so kann der vorgegebene maximale Wert kₘₐₓ jederzeit aktualisiert, d.h. überschrieben werden.

Es kann auch vorgesehen sein, den vorgegebenen maximalen Wert kₘₐₓ fest vorzugeben und in der ersten Mobilstation 1 nicht veränderbar und nicht flüchtig abzuspeichern, beispielsweise in einem Nur-Lese-Speicher. Auch die Zeitdauer bzw. die Zahl der aufeinanderfolgend gesendeten Datenpakete mit eingeschränkter Anzahl von Kombinationen aus Präambel-Bit-Sequenz und Offsetzeitpunkt kann eingeschränkt werden auf eine Maximalzahl, um eine dauerhafte Einschränkung der Wahlfreiheit des Zugriffs auf den Zugriffskanal zu vermeiden.

Im folgenden wird die Effizienz des erfindungsgemäßen Verfahrens anhand eines konkreten Beispiels dargestellt. Die drei Mobilstationen 1, 5, 10 sollen dabei jeweils drei Datenpakete in aufeinanderfolgenden Senderahmen übertragen.

Die erste Mobilstation 1 (MS1) sendet dabei mit einer höheren Leistung als die zweite Mobilstation 5 (MS2) und die dritte Mobilstation 10 (MS3). Die zweite Mobilstation 5 sendet mit einer höheren Leistung als die dritte Mobilstation 10. Es wird dabei angenommen, daß Datenpakete, die mit höherer Leistung auf dem RACH 20 übertragen werden, nicht von Datenpaketen gestört werden, die mit niedrigerer Leistung auf dem RACH 20 übertragen werden. Die Wahrscheinlichkeiten für eine gestörte Übertragung im i-ten Senderahmen unter der beispielhaften Annahme des schlechtesten Falls, daß alle Datenpakete, die kollidieren können, auch tatsächlich kollidieren, sind in der folgenden Tabelle dargestellt:

| Nach dem Stand der Technik | | | | Nach dem erfindungsgemäßen Verfahren | | |
|---|---|---|---|---|---|---|
| i | MS1 | MS2 | MS3 | MS1 | MS2 | MS3 |
| 1 | 0 | 1/(m*n) | Ca. 2/(m*n) | 0 | 1/(m*n) | Ca. 2/(m*n) |
| 2 | 0 | 1/(m*n) | Ca. 2/(m*n) | 0 | 0 | 1/(m*n) |
| 3 | 0 | 1/(m*n) | Ca. 2/(m*n) | 0 | 0 | 0 |

Im linken Teil der Tabelle sind dabei die Kollisionswahrscheinlichkeiten dargestellt, die bei einem Verfahren nach der Veröffentlichung "Concept Group Alpha-WCDMA-Evaluation Document (3.0), Part 1, ETSI-SMG2" auftreten, bei dem für jedes neu zu sendende Datenpaket jeweils aus der vollen Menge der möglichen Kombinationen aus Präambel-Bit-Sequenz und Offsetzeitpunkt ausgewählt werden kann. Der rechte Teil der Tabelle hingegen stellt die Wahrscheinlichkeiten dar, wie sie sich beim erfindungsgemäßen Verfahren ergeben. Im Extremfall können also nach dem Stand der Technik die zweite Mobilstation 5 und die dritte Mobilstation 10 immer zufällig dieselbe Kombination aus Präambel-Bit-Sequenz und Offsetzeitpunkt wählen und dadurch in den aufeinanderfolgenden Senderahmen keines ihrer Datenpakete erfolgreich übertragen.

Gemäß dem erfindungsgemäßen Verfahren können Datenpakete der zweiten Mobilstation 5 und der dritten Mobilstation 10 im zweiten Senderahmen 52 nicht mehr mit einem Datenpaket der ersten Mobilstation 1 kollidieren. Ebenso kann das Datenpaket der dritten Mobilstation 10 im dritten Senderahmen 53 nicht mehr mit dem entsprechenden Datenpaket der zweiten Mobilstation 5 kollidieren. Insgesamt wurden beim erfindungsgemäßen Verfahren, also im schlechtesten anzunehmenden Fall sechs Datenpakete in drei Senderahmen übertragen, während nach dem Stand der Technik nur drei Datenpakete übertragen wurden. Datenpakete werden dabei gemäß der Tabelle immer dann übertragen, wenn für eine Mobilstation in einem Senderahmen die Kollsionswahrscheinlichkeit 0 beträgt.

## Patentansprüche

1. Verfahren zum Zugriff mehrerer Teilnehmerstationen (1, 5, 10) eines Telekommunikationsnetzes (15) auf einen, vorzugsweise wahlfreien, Zugriffskanal (20), wobei eine erste Teilnehmerstation (1) Datenpakete (25, 26, 27) mit jeweils einem Präambelteil (30) und einem Datenteil (35) zu jeweils einem von mehreren möglichen Offsetzeitpunkten (41, ..., 45) innerhalb eines Senderahmens (51, 52, 53) auf dem Zugriffskanal (20) sendet und wobei die Datenpakete (25, 26, 27) der ersten Teilnehmerstation (1) mit Datenpaketen einer weiteren Teilnehmerstation (5, 10) in Abhängigkeit des jeweiligen Präambelteils (30) und Offsetzeitpunktes (41, ..., 45) kollidieren, **dadurch gekennzeichnet, daß** bei erfolgreicher Übertragung eines ersten Datenpaketes (25) der ersten Teilnehmerstation (1) auf dem Zugriffskanal (20) das nächste Datenpaket (26) dieser Teilnehmerstation (1) mit dem gleichen Präambelteil (30) und zum gleichen Offsetzeitpunkt (41, ..., 45) auf dem Zugriffskanal (20) übertragen wird wie das erste Datenpaket (25) und daß bei nicht erfolgreicher Übertragung des ersten Datenpaketes (25) das nächste Datenpaket (26) mit einer im Vergleich zum ersten Datenpaket (25) unterschiedlichen Kombination aus Präambelteil (30) und Offsetzeitpunkt (41, ..., 45) auf dem Zugriffskanal (20) gesendet wird.

2. Verfahren nach Anspruch 1, **dadurch gekennzeichnet, daß** der Datenteil (35) eines auf dem Zugriffskanal (20) zu sendenden Datenpakets (25, 26, 27) in Abhängigkeit des gewählten Präambelteils (30) mit einem Spreizcode kodiert wird, wobei die möglichen Präambelteile (30) und die den möglichen Präambelteilen zugeordneten Spreizcodes jeweils zueinander orthogonal sind.

3. Verfahren nach Anspruch 1 oder 2, **dadurch gekennzeichnet, daß** bei wiederholt nicht erfolgreicher Übertragung von Datenpaketen (25, 26, 27) der ersten Teilnehmerstation (1) auf dem Zugriffskanal (20) eine Mindestanzahl der zugehörigen Kombinationen aus Präambelteil (30) und Offsetzeitpunkt (41, ..., 45) für die Übertragung zumindest eines nachfolgenden Datenpaketes ausgeschlossen werden.

4. Verfahren nach Anspruch 3, **dadurch gekennzeichnet, daß** die Zahl der auszuschließenden Kombinationen aus Präambelteil (30) und Offsetzeitpunkt (41, ..., 45) auf einen vorgegebenen Wert (kmax) begrenzt wird.

5. Verfahren nach Anspruch 4, **dadurch gekennzeichnet, daß** der vorgegebene Wert (kmax) von einer Basistation (40) des Telekommunikationsnetzes (15) an die erste Teilnehmerstation (1) übertragen wird.

6. Verfahren nach Anspruch 4 oder 5, **dadurch gekennzeichnet, daß** der vorgegebene Wert (kmax) in der ersten Teilnehmerstation (1) berechnet wird.

7. Verfahren nach Anspruch 4, 5 oder 6, **dadurch gekennzeichnet, daß** der vorgegebene Wert (kmax) in der ersten Teilnehmerstation (1) vorzugsweise nichtflüchtig gespeichert wird.

8. Verfahren nach einem der vorherigen Ansprüche, **dadurch gekennzeichnet, daß** die Datenpakete (25, 26, 27) von der ersten Teilnehmerstation (1) auf dem Zugriffskanal (20) zu einer Basissstation (40) gesendet werden, wobei die Basisstation (40) den erfolgreichen Empfang jedes Datenpaketes (25, 26, 27) mit einer Quittierungsmeldung an die erste Teilnehmerstation (1) bestätigt.

9. Verfahren nach Anspruch 8, **dadurch gekennzeichnet, daß** in der ersten Teilnehmerstation (1) in Abhängigkeit des Empfangs einer Quittierungsmeldung der Basisstation (40) geprüft wird, ob ein entsprechendes Datenpaket (25, 26, 27) erfolgreich übertragen wurde.

10. Verfahren nach einem der vorherigen Ansprüche, **dadurch gekennzeichnet, daß** bei nicht erfolgreicher Übertragung des ersten Datenpaketes (25) der ersten Teilnehmerstation (1) auf dem Zugriffskanal (20) das nächste Datenpaket (26) der ersten Teilnehmerstation (1) mit dem gleichen Inhalt wie das erste Datenpaket (25) auf dem Zugriffskanal (20) übertragen wird.

## Claims

1. Method for access from a number of subscriber stations (1, 5, 10) in a telecommunications network (15) to a preferably optional access channel (20) with a first subscriber station (1) transmitting data packets (25, 26, 27) in each case having a preamble part (30) and a data part (35) at in each case one of a number of possible offset times (41, ..., 45) within a transmission frame (51, 52, 53) on the access channel (20), and with the data packets (25, 26, 27) from the first subscriber station (1) colliding with data packets from a further subscriber station (5, 10) as a function of the respective preamble part (30) and offset time (41, ..., 45), **characterized in that,** if a first data packet (25) from the first subscriber station (1) is transmitted successfully on the access channel (20), the next data packet (26) from this subscriber station (1) is transmitted with the same preamble part (30) and at the same offset time (41, ..., 45) on the access channel (20) as the first data packet (25), and **in that**, if the first data packet (25) is not transmitted successfully, the next data packet (26) is transmitted with a combination of a preamble part (30) and an offset time (41, ..., 45) on that access channel (20) which differs from the combination used for the first data packet (25).

2. Method according to Claim 1, **characterized in that** the data part (35) of a data packet (25, 26, 27) which is to be transmitted on the access channel (20) is coded with a spread code as a function of the selected preamble part (30), with the possible preamble parts (30) and the spread codes which are associated with the so-called preamble parts in each case being orthogonal to one another.

3. Method according to Claim 1 or 2, **characterized in that**, if data packets (25, 26, 27) from the first subscriber station (1) are repeatedly transmitted unsuccessfully on the access channel (20), a minimum number of the associated combinations of the preamble part (30) and the offset time (41, ..., 45) are excluded for the transmission of at least one subsequent data packet.

4. Method according to Claim 3, **characterized in that** the number of combinations which are to be excluded from the preamble part (30) and the offset time (41, ..., 45) is limited to a predetermined value (kmax).

5. Method according to Claim 4, **characterized in that** the predetermined value (kmax) is transmitted from a base station (40) in the telecommunications network (15) to the first subscriber station (1).

6. Method according to Claim 4 or 5, **characterized in that** the predetermined value (kmax) is calculated in the first subscriber station (1).

7. Method according to Claim 4, 5 or 6, **characterized in that** the predetermined value (kmax) is stored in the first subscriber station (1), preferably in a nonvolatile manner.

8. Method according to one of the preceding claims, **characterized in that** the data packets (25, 26, 27) are transmitted from the first subscriber station (1) on the access channel (20) to a base station (40), with the base station (40) confirming successful reception of each data packet (25, 26, 27) by means of an acknowledgement message to the first subscriber station (1).

9. Method according to Claim 8, **characterized in that**, as a function of the reception of an acknowledgement message from the base station (40), the first subscriber station (1) checks whether a corresponding data packet (25, 26, 27) has been successfully transmitted.

10. Method according to one of the preceding claims, **characterized in that**, if the first data packet (25) from the first subscriber station (1) has not been transmitted successfully on the access channel (20), the next data packet (26) is transmitted from the first subscriber station (1) with the same content as the first data packet (25) and on the access channel (20).

## Revendications

1. Procédé d'accès de plusieurs stations d'abonnés (1, 5, 10) d'un réseau de télécommunication (15) à un canal d'accès (20) choisi librement, selon lequel
une première station d'abonné (1) émet des paquets de données (25, 26, 27) composés chacun d'un préambule (30) et d'une partie de données (35) à chacun de plusieurs instants de décalage possibles (41,..., 45) dans une trame d'émission (51, 52, 53) par le canal d'accès (20) et
les paquets de données (25, 26, 27) de la première station d'abonné (1) entrent en collision avec des paquets de données d'une seconde station d'abonné (5, 10) en fonction du préambule (30) et de l'instant de décalage (41, ..., 45) respectif,
**caractérisé en ce qu'**
en cas de transmission réussie d'un premier paquet de données (25) par la première station d'abonné (1) dans le canal d'accès (20), on transmet le paquet de données suivant (26) de cette station d'abonné (1) avec le même préambule (30) et au même instant de décalage (41, ..., 45) par le canal d'accès (20) que le premier paquet de données (25), et
en cas de transmission non réussie du premier paquet de données (25) on transmet le paquet de données (26) suivant avec une combinaison d'un préambule (30) et d'un instant de décalage (41, ..., 45) différente de la combinaison utilisée pour le premier paquet (25) dans le canal d'accès (20).

2. Procédé selon la revendication 1,
**caractérisé en ce que**
la partie de données (35) d'un paquet de données (25, 26, 27) à envoyer par le canal d'accès (20) est codée avec un code d'étalement dépendant du préambule (30) choisi,
les préambules possibles (30) et les codes d'étalement associés aux préambules possibles étant orthogonaux entre eux.

3. Procédé selon l'une quelconque des revendications 1 ou 2,
**caractérisé en ce qu'**
en cas de transmission répétée, non réussie, de paquets de données (25, 26, 27) de la première station d'abonné (1) dans le canal d'accès (20), on exclut un nombre minimum de combinaisons correspondantes formées du préambule (30) et de l'instant de décalage (41, ..., 45) pour la transmission d'au moins un paquet de données suivant.

4. Procédé selon la revendication 3,
**caractérisé en ce qu'**
on limite le nombre de combinaisons à exclure formées du préambule (30) et de l'instant de décalage (41, ..., 45) à une valeur prédéterminée (kₘₐₓ).

5. Procédé selon la revendication 4,
**caractérisé en ce qu'**
on transmet la valeur prédéterminée (kₘₐₓ) d'une station de base (40) du réseau de télécommunication (15) vers la première station d'abonné (1).

6. Procédé selon l'une quelconque des revendications 4 ou 5,
**caractérisé en ce qu'**
on calcule la valeur prédéterminée (kₘₐₓ) dans la première station d'abonné (1).

7. Procédé selon l'une quelconque des revendications 4, 5, 6,
**caractérisé en ce qu'**
on enregistre la valeur prédéterminée (kₘₐₓ) dans la première station d'abonné (1), de préférence selon un enregistrement non volatile.

8. Procédé selon l'une quelconque des revendications précédentes,
**caractérisé en ce qu'**
on émet les paquets de données (25, 26, 27) de la première station d'abonné (1) dans le canal d'accès (20) vers une station de base (40),
la station de base (40) confirmant la réception réussie de chaque paquet de données (25, 26, 27) avec un signal de réception envoyé à la première station d'abonné (1).

9. Procédé selon la revendication 8,
**caractérisé en ce qu'**
en fonction de la réception d'un signal de réception venant de la station de base (40) on vérifie dans la première station d'abonné (1) si un paquet de données correspondant (25, 26, 27) a été transmis correctement.

10. Procédé selon l'une quelconque des revendications précédentes,
**caractérisé en ce qu'**
en cas de transmission non réussie du premier paquet de données (25) par la première station d'abonné (1) dans le canal d'accès (20), on transmet le paquet de données suivant (26) de la première station d'abonné (1) avec le même contenu que le premier paquet de données (25) dans le canal d'accès (20).
